# FASCICULE DE BREVET EUROPEEN

(11) **EP 2 895 773 B1**
(45) Date de publication et mention de la délivrance du brevet: **07.12.2016**
(21) Numéro de dépôt: 13792733.1
(22) Date de dépôt: 16.09.2013
(51) Int. Cl.: F16J 15/32

(54) **JOINT D'ÉTANCHÉITÉ, EN PARTICULIER POUR LIQUIDE SOUS PRESSION**
DICHTUNG, INSBESONDERE FÜR EINE UNTER DRUCK STEHENDE FLÜSSIGKEIT
GASKET, IN PARTICULAR FOR A PRESSURISED LIQUID

(30) Priorité: 14.09.2012 FR 1258667
(43) Date de publication de la demande: 22.07.2015
(73) Titulaire: Carl Freudenberg KG, 69469 Weinheim (DE)
(72) Inventeur: GIRARDOT, Thierry, F-52200 Saint Geosmes (FR); LUTAUD, Dominique, F-52360 Orbigny Au Mont (FR); SOUDET, Arnaud, F-52250 Longeau (FR)
(74) Mandataire: Nuss, Laurent
(86) Numéro de dépôt international: PCT/IB2013/002014
(87) Numéro de publication internationale: WO 2014/041420

(56) Documents cités:
- DE-A1-102006 059 398
- GB-A- 2 173 264
- US-A- 5 056 799
- US-A1- 2003 031 828

## Description

La présente invention concerne le domaine des joints d'étanchéité, en particulier ceux réalisant l'étanchéité au niveau et autour d'un élément mobile, tels qu'un arbre, un axe ou analogue, animé d'un mouvement rotatoire et s'étendant dans ou à travers un passage, un logement, une ouverture ou analogue d'un corps, élément, carter ou analogue fixe.

Plus particulièrement, l'invention concerne un joint d'étanchéité comprenant, d'une part, une bague support ou d'armature (généralement en tôle d'acier) avec une aile axiale externe et une aile radiale interne et, d'autre part, une rondelle en un matériau d'étanchéité à base de PTFE, qui est montée ou agencée sur ladite bague, en recouvrant au moins partiellement la face externe de l'aile axiale et en s'étendant au-delà de l'extrémité interne de l'aile radiale de manière à former une lèvre d'étanchéité souple. Cette lèvre est destinée à venir en application circonférentiellement contre ou sur un élément à étancher, en particulier un élément cylindrique rotatoire tel qu'un arbre ou analogue, ladite lèvre d'étanchéité présentant alors une première portion annulaire majoritairement en appui sur l'élément à étancher et une seconde portion annulaire de liaison cintrée (reliant la première portion extrêmale de la lèvre à la partie de la rondelle solidarisée à l'aile radiale de la bague).

Un tel joint est notamment connu par les documents WO 2008/009317 et US 2003/0031828 (Fig. 5a), qui montrent le préambule de la revendication 1. Ces joints réalisent, avec la même rondelle, une double étanchéité, à savoir à la fois une étanchéité dynamique interne par rapport à l'élément mobile (par l'intermédiaire de la lèvre d'étanchéité souple/non supportée par la bague) et une étanchéité statique externe par rapport à la paroi du logement ou de l'ouverture de montage, généralement traversé(e) par l'élément à étancher (par l'intermédiaire de la partie de rondelle présente sur la face externe de l'aile axiale).

Toutefois, les joints d'étanchéité divulgués par ces deux documents présentent au moins les deux inconvénients suivants:
1) on constate un relèvement du bout libre de la lèvre d'étanchéité dont l'effet est néfaste en terme de maintien en application et de tenue en étanchéité, en particulier lorsque cette lèvre repose sur l'élément à étancher sur une grande longueur (portée axiale importante) ;
2) ces joints ne sont pas adaptés pour résister à la pression (problème de tenue en étanchéité au niveau de l'élément à étancher lorsque le milieu à isoler contient du liquide sous pression, typiquement entre environ 1 et 10 bars), du fait d'une faible résistance à la déformation, voire d'un possible retournement de la lèvre d'étanchéité, lorsque cette dernière est soumise à la pression (par exemple dans des applications du type étanchéification d'arbres de pompe).

Pour tenter de pallier ces deux inconvénients, le document US 2002/0117810 propose un joint d'étanchéité dont la lèvre d'étanchéité présente une épaisseur importante et est subdivisée radialement en une lèvre primaire d'étanchéité, venant en appui sur l'élément à étancher, et une lèvre secondaire d'appui élastique.

Cette lèvre secondaire vient (en l'absence de pression significative) en contact avec l'extrémité libre (bout) en exerçant une force d'appui sollicitant cette extrémité contre l'élément à étancher et luttant ainsi contre son décollement et son relèvement.

En outre, lorsque le milieu à isoler est soumis à une pression, les lèvres primaire et secondaire se superposent intimement et forment ensemble une lèvre unique de forte épaisseur apte à résister à la pression, sans se retourner.

Toutefois, bien que donnant satisfaction lorsque la zone de contact lèvre/élément a une faible portée, cette solution est complexe structurellement et sa réalisation est délicate (nécessité d'une découpe précise de la lèvre, double usinage des lèvres primaire et secondaire).

En outre, le coût matière est élevé compte tenu de l'importante épaisseur de la lèvre de base et les efforts de friction entre la lèvre et l'élément mobile sont augmentés.

Enfin, dans le document US 2002/0117810, l'étanchéité statique externe (entre joint et logement) est obtenue par mise en oeuvre d'un second matériau d'étanchéité.

La présente invention a pour but de pallier au moins les inconvénients majeurs précités, en proposant une solution simple, aisée à réaliser et économique.

A cet effet, l'invention propose un joint d'étanchéité du type précité, amélioré et notamment adapté pour résister à la pression, ce joint étant caractérisé en ce que la lèvre d'étanchéité présente une faible épaisseur, typiquement inférieure à 0,8 mm, et forme, en l'absence de contrainte, sensiblement un manchon ou anneau tronconique avec un angle au sommet de 90 ° - α, α étant compris entre 10 ° et 50 °.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en coupe d'un joint d'étanchéité selon un premier mode de réalisation, en l'absence de toute contrainte ;
la figure 2 est une vue en coupe similaire du joint d'étanchéité de la figure 1 après son montage dans un logement et autour de l'élément à étancher (arbre) ;
la figure 3 est une vue en coupe partielle d'un système d'étanchéité d'une pompe à carburant comprenant un joint d'étanchéité tel que représenté aux figures 1 et 2 ;
les figures 4 et 5 sont des vues en coupe partielles d'un joint d'étanchéité à l'état monté, selon deux autres variantes constructives du premier mode de réalisation de l'invention ;
les figures 6 à 8 sont des vues en coupe partielle d'un joint d'étanchéité à l'état monté, selon trois variantes constructives d'un second mode de réalisation de l'invention, et,
la figure 9 est une vue en coupe partielle du joint de la figure 8, en l'absence de contrainte (avant montage).

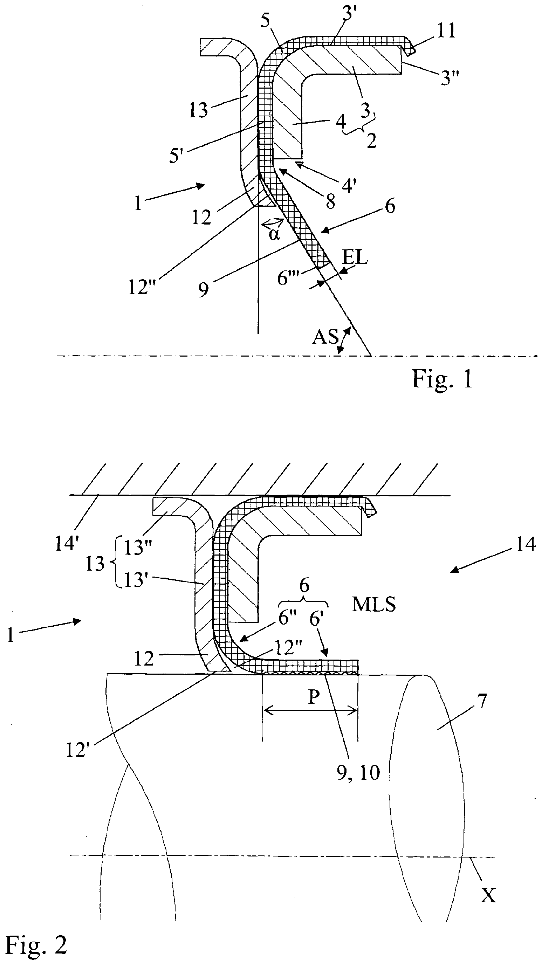

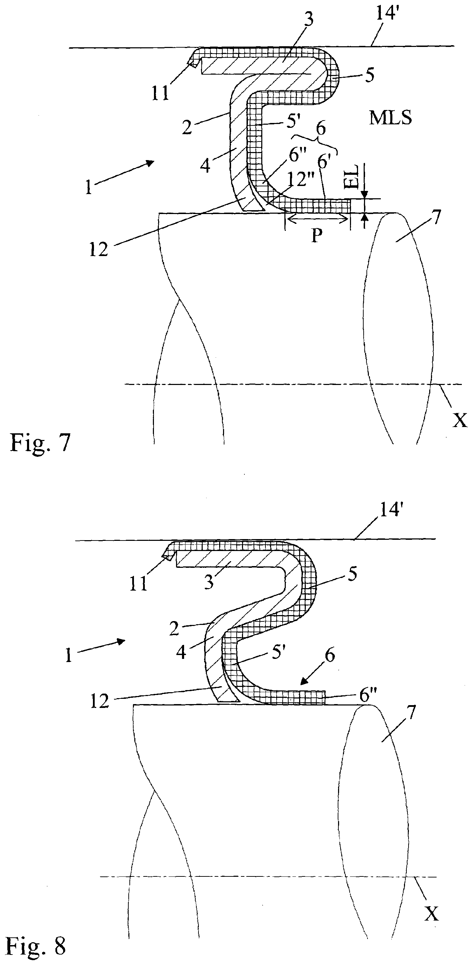

Les figures 1, 2 et 4 à 8 montrent un joint d'étanchéité 1, en particulier pour liquide sous pression. Ce joint 1 comprend, d'une part, une bague support ou d'armature 2 avec une aile axiale externe 3 et une aile radiale interne 4 et, d'autre part, une rondelle 5 en un matériau d'étanchéité à base de PTFE, qui est montée ou agencée sur ladite bague 2, en recouvrant au moins partiellement la face externe 3' de l'aile axiale 3 et en s'étendant au-delà de l'extrémité interne 4' de l'aile radiale 4 de manière à former une lèvre d'étanchéité souple 6. Cette dernière est destinée à venir en application circonférentiellement contre ou sur un élément à étancher 7, en particulier un élément cylindrique rotatoire tel qu'un arbre ou analogue, ladite lèvre d'étanchéité 6 présentant alors une première portion annulaire 6' majoritairement en appui sur l'élément à étancher et une seconde portion annulaire de liaison 6" cintrée.

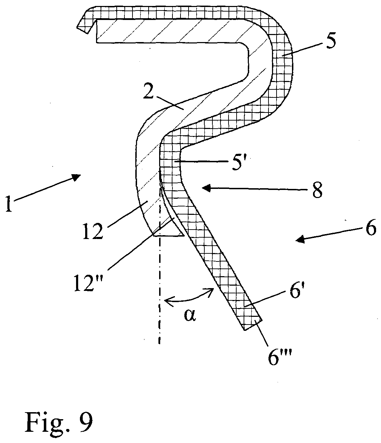

Conformément à l'invention, et comme le montre plus précisément la figure 1, la lèvre d'étanchéité 6 présente une faible épaisseur EL, typiquement inférieure à 0,8 mm, et forme, en l'absence de contrainte, sensiblement un manchon ou anneau tronconique avec un angle au sommet de 90 ° - α, α étant compris entre 10 ° et 50 ° (Figures 1 et 9).

Autrement dit, et comme le montre la figure 1, l'angle au sommet AS = 90 °- α est compris entre 40 ° et 80 ° (α étant l'angle par rapport au plan perpendiculaire à l'axe central de symétrie du joint 1).

Les inventeurs ont constaté que, de manière inattendue et surprenante, un joint d'étanchéité 1 du type indiqué ci-dessus dont la lèvre 5 présentait les deux dispositions techniques précitées, ne faisait pas état du phénomène de relèvement du bout de la lèvre 6, même lorsque la zone de contact 9 présente une dimension axiale importante.

De plus, l'inclinaison initiale spécifique (intrinsèque à la rondelle 4) de la lèvre d'étanchéité 6, avant sa venue en application contre l'élément à étancher 7, par rapport à l'axe central de symétrie du joint 1 (généralement confondu avec l'axe X de rotation/symétrie de l'élément 7), d'une part, et par rapport à la partie 5' de la rondelle 5 en application intime sur l'extrémité interne 4' de l'aile radiale 4 (angle α), d'autre part, aboutit simultanément à un préconditionnement de la lèvre 6 augmentant sa résistance à un retournement en cas d'application de pression depuis le côté vers lequel la lèvre 6 est originellement inclinée.

Bien entendu, le raccordement entre la lèvre 6 et la partie 5' de la rondelle 5 ne présente pas une ligne de pliage nette, mais plutôt une zone de transition incurvée 8.

Plus précisément, et selon une disposition avantageuse de l'invention, la lèvre d'étanchéité 6, préférentiellement sous forme de manchon tronconique à paroi sensiblement plane en l'absence de contrainte, est reliée à la partie 5' de la rondelle 5 en appui et/ou solidarisée avec l'aile radiale 4, par une région annulaire précintrée ou infléchie 8 de la rondelle 5, située avantageusement immédiatement après l'extrémité interne 4' de ladite aile radiale 4, orientée en direction du milieu à étancher MLS et faisant partie de la portion annulaire de liaison 6".

La région 8 est ainsi formée dans la rondelle 5 (sous forme de déformation locale permanente de la paroi de celle-ci) lors de la fabrication du joint d'étanchéité 1 (préférentiellement par déformation lors de la solidarisation de la rondelle 5 avec la bague 2) et constitue une amorce au cintrage de la portion de liaison 6" lors du montage du joint 1 sur l'élément 7.

En accord avec un mode de réalisation pratique préférentiel de l'invention, permettant selon les inventeurs de répondre de manière optimisée aux inconvénients précités, tout en limitant les coûts et en évitant de complexifier la construction et le procédé de fabrication du joint 1 (en particulier par rapport au procédé de fabrication décrit dans le document WO 2008/009317 précité), il est avantageusement prévu que l'épaisseur de la lèvre d'étanchéité 6 soit comprise entre 0,4 et 0,7 mm, préférentiellement entre 0,45 et 0,65 mm, et que l'angle α soit compris entre 15 ° et 45 °, préférentiellement entre 20 ° et 40 °. En outre, la région précintrée 8 est avantageusement conformée par déformation locale de la paroi de la rondelle 5, avant ou après montage sur la bague porteuse 2.

Afin de garantir une étanchéité de qualité suffisante pour répondre à des exigences applicatives extrêmes, en particulier sous pression, les dimensions et les dispositions relatives de la bague support 2, de la rondelle 5 en matériau à base de PTFE et de l'élément à étancher 7 peuvent être déterminées pour définir une zone 9 de contact et d'appui intimes de la portion 6' de la lèvre d'étanchéité 6 sur ledit élément 7 avec une portée axiale P (selon la direction X) comprise entre 1,5 et 5,0 mm, préférentiellement comprise entre 2,5 et 3,5 mm, depuis le bord libre 6'" de ladite lèvre 6.

Malgré cette portée importante, les inventeurs ont constaté que le respect des dispositions géométriques précitées permettaient d'éviter le phénomène de relèvement du bout 6" et de fournir une résistance augmentée au retournement (repliement de la lèvre 6 et passage sous l'aile radiale 4).

La portion 6' de la lèvre 6 peut comporter une face d'appui lisse (zone de contact 9) et présente généralement une épaisseur sensiblement constante (bien qu'une variation de l'épaisseur en fonction des conditions de mise en oeuvre puisse être envisagée).

Néanmoins, selon une caractéristique additionnelle de l'invention, non représentée en détail aux figures annexées (seulement schématiquement sur la figure 2), la lèvre d'étanchéité 6 peut comporter, au niveau de la face de contact de la portion 6' de cette lèvre 6 destinée à venir en appui sur l'élément à étancher 7, une structure de refoulement 10 hélicoïdale ou en forme de filetage, avantageusement sous la forme d'une rainure à flancs opposés d'inclinaisons ou de pentes différentes, préférentiellement à section ou profil de forme triangulaire asymétrique.

Une telle structure 10 peut, par exemple, être du type de celle décrite dans la demande de brevet PCT n° PCT/FR2012/050239 et dans la demande de brevet français n° 12 51011 du 3 février 2012, au nom de la demanderesse.

En outre, comme représenté aux figures 1 à 4 et 6 à 8, il peut également être prévu que la rondelle d'étanchéité 5 dépasse du bord libre 3" de l'aile axiale 3 et forme une partie en saillie 11, inclinée ou recourbée vers l'intérieur et recouvrant au moins l'arête extérieure dudit bord libre 11.

La partie en saillie 11 forme ainsi un biseau rapporté sur l'arête frontale d'introduction du joint 1 dans son logement 14, facilitant son centrage et évitant tout décollement de la rondelle 5 par rapport à l'aile axiale 3 lors du montage serré ou ajusté du joint 1.

Afin de garantir une conservation de l'étanchéité dynamique en cas de forte pression, d'éviter un endommagement de la lèvre d'étanchéité 6 en cas de pics de pression (en particulier répétés) et d'exclure tout retournement de ladite lèvre 6, le joint 1 peut en outre comprendre ou comporter une structure annulaire 12 spécifique d'appui et de soutien pour la lèvre d'étanchéité 6 située du côté opposé au milieu à étancher MLS et s'étendant au niveau de la portion annulaire cintrée 6" de ladite lèvre 6, en épousant partiellement la forme de cette portion 6" et en étant séparée de cette dernière.

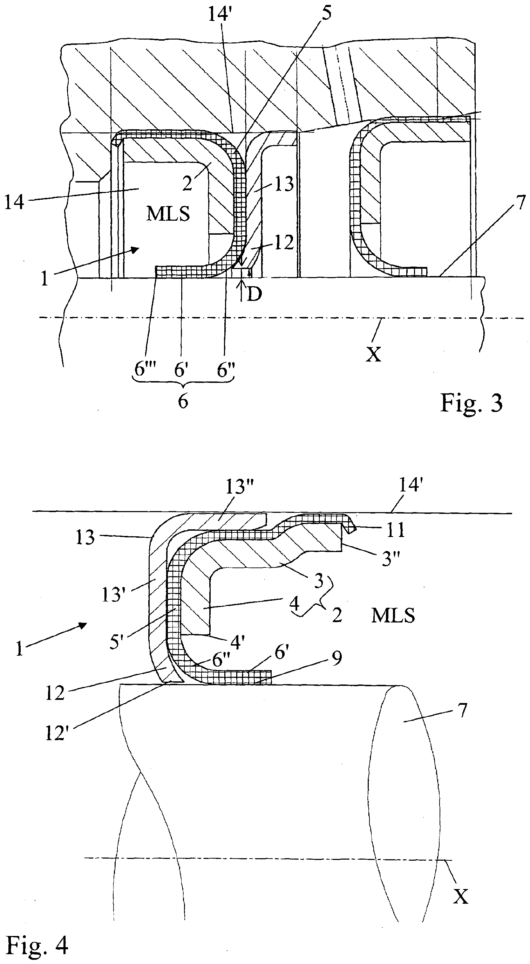

Comme cela ressort des figures annexées, la lèvre 6 n'est pas solidarisée à cette structure 12, ni en appui contre elle en l'absence de pression suffisante sur ladite lèvre 6 (présence d'un interstice cunéiforme 12" entre 12 et 6 sauf sur la figure 3 du fait de la présence d'une pression suffisante). Cette absence de solidarisation permet de garantir à la lèvre 6 une grande souplesse et une bonne faculté d'adaptation à d'éventuels mouvements radiaux ou dissymétries de l'élément mobile à étancher 7.

On note d'ailleurs, en comparant par exemple les figures 1 et 2, que la taille de cet interstice 12" augmente lorsque la lèvre 6 vient en appui sur l'élément 7, ce du fait de la flexion forcée de la portion 6" résultant en un cintrage plus accentué, et donc à une séparation plus importante entre 6" et 12 (en l'absence de pression sur la lèvre 6 par le milieu à étancher).

Il en résulte une bonne adaptabilité de la lèvre 6 (aux déplacements relatifs entre bague 2 et élément 7) malgré la présence de la structure rigide 12.

En accord avec une réalisation avantageuse de l'invention, la structure annulaire d'appui et de soutien 12 consiste en une aile circonférentielle cintrée, le rayon de cintrage de ladite aile 12 étant supérieur au rayon de cintrage, en l'absence de pression, de la portion annulaire de liaison 6" de la lèvre d'étanchéité 6 après installation du joint d'étanchéité 1 autour de l'élément à étancher 7, préférentiellement supérieur au rayon de cintrage de la région annulaire précintrée 8 de la rondelle 5, en l'absence de contrainte sur la lèvre d'étanchéité 6.

Préférentiellement, la structure annulaire 12 d'appui et de soutien, sous forme d'aile circonférentielle, s'étend jusqu'à une faible distance D de l'élément à étancher 7, le bord libre 12' de l'aile 12 étant situé à une distance dudit élément 7 qui est inférieure à l'épaisseur EL de la lèvre d'étanchéité 6, préférentiellement inférieure à au moins la moitié de ladite épaisseur EL, voire de l'ordre du quart ou du tiers de cette épaisseur (fonction aussi de l'uniformité de la surface et du mouvement de l'élément 7).

L'aile 12 peut alors remplir également une fonction d'écran pare-poussière ou autre, en combinaison avec le composant 2 ou 13 dont elle fait partie.

Conformément à un premier mode de réalisation de l'invention, dont différentes variantes sont illustrées aux figures 1 à 5 des dessins, la structure d'appui et de soutien 12 fait partie d'une seconde bague 13 comportant au moins une aile radiale 13' prolongée du côté interne par une portion d'aile annulaire incurvée 12 formant ladite structure.

La seconde bague 13 peut être assemblée de différentes manières (mécaniquement, adhésivement, matériellement ou par combinaison de plusieurs modes de solidarisation) avec la bague 2 et/ou la rondelle 5, et forme alors avec ces dernières un joint d'étanchéité 1 composite à trois composantes constitutives.

La seconde bague 13 comporte préférentiellement aussi une aile axiale 13" pour son montage avec maintien dans le logement 14 simultanément avec la bague 2 (les bagues 13 et 2 sont préférentiellement réalisées dans le même matériau).

Bien que non représenté, un matériau d'étanchéité peut éventuellement être mis en place sur cette aile 13" (sur sa face en contact avec le logement 14).

De manière avantageuse, au moins la partie 5' de la rondelle 5 agencée sur l'aile radiale 4 de la bague support 2 est prise en sandwich entre cette dernière et l'aile radiale 13' de la seconde bague 13, avec éventuellement réalisation d'un pincement mécanique de ladite partie de rondelle 5'.

La seconde bague 13 peut même venir en emboîtement élastique serré sur la bague support 2 avec prise en sandwich de la rondelle 5 (Figure 4).

Comme le montrent les figures 1 à 5, l'aile 12 accompagne la lèvre 6 au-delà de l'extrémité 4' de l'aile radiale 4 et peut même participer au ou soutenir le précintrage de la région 8, au niveau de sa transition avec la partie 5' de la rondelle 5, sans toutefois être solidarisée à cette lèvre 6.

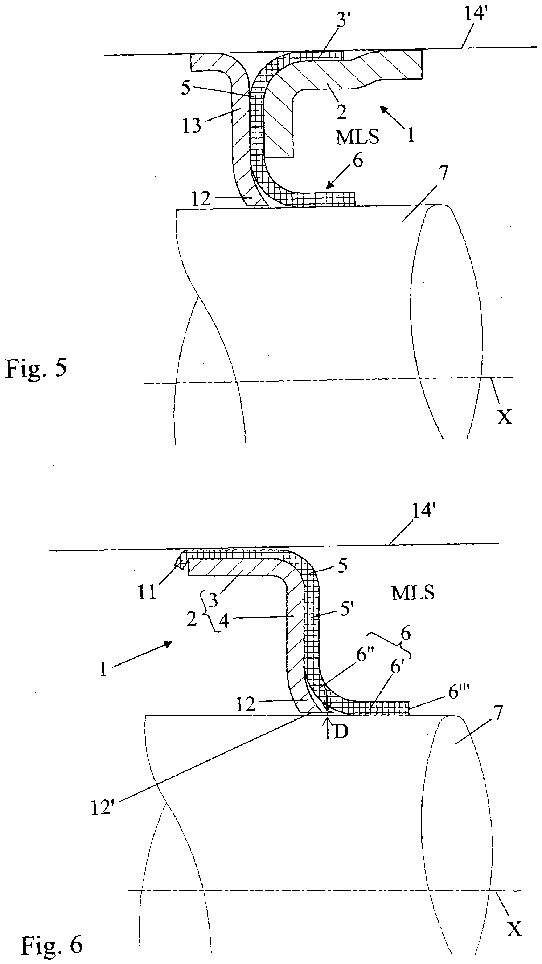

Conformément à un second mode de réalisation de l'invention, dont plusieurs variantes sont illustrées sur les figures 6 à 8, la structure d'appui et de soutien 12 fait partie intégrante de la bague support 2 et consiste en une portion d'aile incurvée prolongeant intérieurement l'aile radiale 4.

On aboutit ainsi à une construction de joint 1 simple, ne nécessitant pas de composante supplémentaire, tout en fournissant les avantages précités.

La bague support 2 peut présenter différentes formes. En particulier, une même forme de base peut être déclinée en plusieurs variantes selon les dimensions du logement 14, la rigidité souhaitée, l'encombrement disponible ou la configuration locale (Figures 6 à 8).

Selon une variante de réalisation pratique, adaptée notamment à des applications en relation avec des liquides chimiquement agressifs, la conformation de la bague 2 et la disposition relative de la rondelle sur cette bague peuvent être prévues de telle manière que ladite rondelle 5 recouvre toutes les faces de la bague support 2 dirigées, d'une part, vers le milieu sous pression MLS et, d'autre part, vers la paroi 14' du logement de montage 14 du joint d'étanchéité 1, contre laquelle vient en appui étanche l'aile axiale 3 de la bague support 2.

Enfin, en vue de garantir la tenue du montage du joint 1 dans le logement 14, même en cas de variations thermiques importantes, l'invention peut prévoir que la bague support 2 et, le cas échéant, la seconde bague 13, est(sont) réalisée(s) en une tôle du type HLE, comme spécifié dans les demandes de brevets PCT et français de la demanderesse.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Joint d'étanchéité, en particulier pour liquide sous pression, comprenant, d'une part, une bague support ou d'armature (2) avec une aile axiale externe (3) et une aile radiale interne (4) et, d'autre part, une rondelle (5) en un matériau d'étanchéité à base de PTFE, qui est montée ou agencée sur ladite bague (2), en recouvrant au moins partiellement la face externe (3') de l'aile axiale (3) et en s'étendant au-delà de l'extrémité interne (4') de l'aile radiale (4) de manière à former une lèvre d'étanchéité souple (6), destinée à venir en application circonférentiellement contre ou sur un élément à étancher (7), en particulier un élément cylindrique rotatoire tel qu'un arbre ou analogue, ladite lèvre d'étanchéité (6) présentant alors une portion annulaire (6') majoritairement en appui sur l'élément à étancher et une portion annulaire de liaison (6") cintrée,
joint d'étanchéité (1) **caractérisé en ce que** la lèvre d'étanchéité (6) présente une épaisseur (EL), inférieure à 0,8 mm et forme, en l'absence de contrainte, un manchon ou anneau tronconique avec un angle au sommet (AS) compris entre 40 ° et 80 °.

2. Joint d'étanchéité selon la revendication 1, **caractérisé en ce que** la lèvre d'étanchéité (6), préférentiellement sous forme de manchon tronconique à paroi sensiblement plane en l'absence de contrainte, est reliée à la partie (5') de la rondelle (5) en appui et/ou solidarisée avec l'aile radiale (4), par une région annulaire précintrée ou infléchie (8) de la rondelle (5), située avantageusement immédiatement après l'extrémité interne (4') de ladite aile radiale (4), orientée en direction du milieu à étancher (MLS) et faisant partie de la portion annulaire de liaison (6").

3. Joint d'étanchéité selon la revendication 1 ou 2, **caractérisé en ce que** l'épaisseur de la lèvre d'étanchéité (6) est comprise entre 0,4 et 0,7 mm, préférentiellement entre 0,45 et 0,65 mm, et **en ce que** l'angle au sommet (AS) est compris entre 45 ° et 75 °, préférentiellement entre 50 ° et 70 °, la région précintrée (8) étant avantageusement conformée par déformation locale de la paroi de la rondelle (5), avant ou après montage sur la bague porteuse (2).

4. Joint d'étanchéité selon l'une quelconque des revendications 1 à 3, **caractérisé en ce que** les dimensions et les dispositions relatives de la bague support (2), de la rondelle (5) en matériau à base de PTFE et de l'élément à étancher (7) définissent une zone (9) de contact et d'appui intime de la portion (6') de la lèvre d'étanchéité (6) sur ledit élément (7) avec une portée axiale (P) comprise entre 1,5 et 5,0 mm, préférentiellement comprise entre 2,5 et 3,5 mm, depuis le bord libre (6"') de ladite lèvre (6).

5. Joint d'étanchéité selon l'une quelconque des revendications 1 à 4, **caractérisé en ce que** la lèvre d'étanchéité (6) comporte, au niveau de la face de contact de la portion (6') de cette lèvre (6) destinée à venir en appui sur l'élément à étancher (7), une structure de refoulement (10) hélicoïdale ou en forme de filetage, avantageusement sous la forme d'une rainure à flancs opposés d'inclinaisons ou de pentes différentes, préférentiellement à section ou profil de forme triangulaire asymétrique.

6. Joint d'étanchéité selon l'une quelconque des revendications 1 à 5, **caractérisé en ce que** la rondelle d'étanchéité (5) dépasse du bord libre (3") de l'aile axiale (3) et forme une partie en saillie (11), incliné ou recourbée vers l'intérieur et recouvrant au moins l'arête extérieure dudit bord libre (11).

7. Joint d'étanchéité selon l'une quelconque des revendications 1 à 6, **caractérisé en ce qu'**il comprend une structure annulaire (12) d'appui et de soutien pour la lèvre d'étanchéité (6) située du côté opposé au milieu à étancher (MLS) et s'étendant au niveau de la portion annulaire cintrée (6") de ladite lèvre (6), en épousant partiellement la forme de cette portion (6") et en étant séparée de cette dernière.

8. Joint d'étanchéité selon la revendication 7, **caractérisé en ce que** la structure annulaire d'appui et de soutien (12) consiste en une aile circonférentielle cintrée, le rayon de cintrage de ladite aile (12) étant supérieur au rayon de cintrage, en l'absence de pression, de la portion annulaire de liaison (6") de la lèvre d'étanchéité (6) après installation du joint d'étanchéité (1) autour de l'élément à étancher (7), préférentiellement supérieur au rayon de cintrage de la région annulaire précintrée (8) de la rondelle (5), en l'absence de contrainte sur la lèvre d'étanchéité (6).

9. Joint d'étanchéité selon l'une quelconque des revendications 7 et 8, **caractérisé en ce que** la structure annulaire (12) d'appui et de soutien, sous forme d'aile circonférentielle, s'étend jusqu'à une faible distance de l'élément à étancher (7), le bord libre (12') de l'aile (12) étant situé à une distance dudit élément (7) qui est inférieure à l'épaisseur (EL) de la lèvre d'étanchéité (6), préférentiellement inférieure à au moins la moitié de ladite épaisseur (EL).

10. Joint d'étanchéité selon l'une quelconque des revendications 7 à 9, **caractérisé en ce que** la structure d'appui et de soutien (12) fait partie d'une seconde bague (13) comportant au moins une aile radiale (13') prolongée du côté interne par une portion d'aile annulaire incurvée (12) formant ladite structure.

11. Joint d'étanchéité selon la revendication 10, **caractérisé en ce qu'**au moins la partie (5') de la rondelle (5) agencée sur l'aile radiale (4) de la bague support (2) est prise en sandwich entre cette dernière et l'aile radiale (13') de la seconde bague (13), avec éventuellement réalisation d'un pincement mécanique de ladite partie de rondelle (5').

12. Joint d'étanchéité selon l'une quelconque des revendications 7 à 9, **caractérisé en ce que** la structure d'appui et de soutien (12) fait partie intégrante de la bague support (2) et consiste en une portion d'aile incurvée prolongeant intérieurement l'aile radiale (4).

13. Joint d'étanchéité selon l'une quelconque des revendications 1 à 9 et 12, **caractérisé en ce que** la rondelle (5) recouvre toutes les faces de la bague support (2) dirigées, d'une part, vers le milieu sous pression (MLS) et, d'autre part, vers la paroi (14') du logement de montage (14) du joint d'étanchéité (1), contre laquelle vient en appui étanche l'aile axiale (3) de la bague support (2).

14. Joint d'étanchéité selon l'une quelconque des revendications 1 à 9, 12 et 13 ou l'une quelconque des revendications 10 et 11, **caractérisé en ce que** la bague support (2) et, le cas échéant, la seconde bague (13), est(sont) réalisée(s) en une tôle du type HLE.

## Patentansprüche

1. Dichtung, insbesondere für eine Flüssigkeit unter Druck, umfassend einerseits einen Stütz- oder Armierungsring (2) mit einem äußeren axialen Flansch (3) und einem inneren radialen Flansch (4) und andererseits eine auf dem Ring (2) montierte oder angeordnete Scheibe (5) aus einem Dichtungsmaterial auf Basis von PTFE, die zumindest teilweise die Außenfläche (3') des axialen Flansches (3) bedeckt und sich derart über das innere Ende (4') des radialen Flansches (4) hinaus erstreckt, dass eine biegsame Dichtungslippe (6) ausgebildet ist, die in Umfangsrichtung zur Anlage gegen oder auf einem abzudichtenden Element (7), insbesondere einem drehbaren zylindrischen Element wie einer Welle oder dergleichen, vorgesehen ist, wobei die Dichtungslippe (6) somit einen ringförmigen Abschnitt (6'), der größtenteils auf dem abzudichtenden Element anliegt, und einen gebogenen ringförmigen Verbindungsabschnitt (6") aufweist, und
die Dichtung (1) **dadurch gekennzeichnet ist, dass** die Dichtungslippe (6) eine Dicke (EL) geringer als 0,8 mm aufweist und in Abwesenheit von Spannung eine kegelstumpfförmige Hülse oder einen kegelstumpfförmigen Ring mit einem Scheitelwinkel (AS) zwischen 40° und 80° formt.

2. Dichtung nach Anspruch 1, **dadurch gekennzeichnet, dass** die Dichtungslippe (6), bevorzugt in Form einer kegelstumpfförmigen Hülse mit einer im Wesentlichen ebenen Wand in Abwesenheit von Spannung, mit einem Abschnitt (5') der anliegenden Scheibe (5) verbunden ist und/oder mit dem radialen Flansch (4) durch einen vorgebogenen oder gekrümmten ringförmigen Abschnitt (8) der Scheibe (5) fest verbunden ist, wobei der vorgebogene oder gekrümmte ringförmige Abschnitt (8) vorteilhaft direkt hinter dem inneren Ende (4') des radialen Flansches (4) angeordnet ist und in Richtung der abzudichtenden Mitte (MLS) ausgerichtet ist und Teil des ringförmigen Verbindungsabschnitts (6") ist.

3. Dichtung nach Anspruch 1 oder 2, **dadurch gekennzeichnet, dass** die Dicke der Dichtungslippe (6) zwischen 0,4 mm und 0,7 mm, bevorzugt zwischen 0,45 mm und 0,65 mm, beträgt und dass der Scheitelwinkel (AS) zwischen 45° und 75°, bevorzugt zwischen 50° und 70°, beträgt, wobei der vorgebogene Abschnitt (8) vorteilhaft durch lokale Verformung der Wand der Scheibe (5) vor oder nach Montieren auf dem Trägerring (2) angepasst ist.

4. Dichtung nach einem der Ansprüche 1 bis 3, **dadurch gekennzeichnet, dass** die Abmessungen und relativen Anordnungen des Stützrings (2), der Scheibe (5) aus Material auf Basis von PTFE und des abzudichtenden Elements (7) einen engen Kontakt- und Anlagebereich (9) des Abschnitts (6') der Dichtungslippe (6) auf dem Element (7) mit einer axialen Auflagefläche (P) definieren, die ab dem freien Rand (6"') der Lippe (6) zwischen 1,5 mm und 5,0 mm, bevorzugt zwischen 2,5 mm und 3,5 mm, beträgt.

5. Dichtung nach einem der Ansprüche 1 bis 4, **dadurch gekennzeichnet, dass** die Dichtungslippe (6) auf Höhe der zur Anlage auf dem abzudichtenden Element (7) vorgesehenen Kontaktfläche des Abschnitts (6') der Lippe (6) eine schrauben- oder gewindeförmige Verdrängungsstruktur (10) aufweist, die vorteilhaft in Form einer Rille mit gegenüberliegenden Flanken unterschiedlicher Neigung oder Steigung, bevorzugt mit einem asymmetrischen dreieckigen Querschnitt oder Profil, ausgebildet ist.

6. Dichtung nach einem der Ansprüche 1 bis 5, **dadurch gekennzeichnet, dass** die Dichtungsscheibe (5) den freien Rand (3") des axialen Flansches (3) überragt und einen vorspringenden Abschnitt (11) ausbildet, der nach innen geneigt oder gebogen ist und mindestens die äußere Kante des freien Rands (11) bedeckt.

7. Dichtung nach einem der Ansprüche 1 bis 6, **dadurch gekennzeichnet, dass** die Dichtung eine ringförmige Anlage- und Stützstruktur (12) für die Dichtungslippe (6) aufweist, die auf der Seite gegenüberliegend der abzudichtenden Mitte (MLS) angeordnet ist und sich auf Höhe des gebogenen ringförmigen Abschnitts (6") der Lippe (6) erstreckt, der Form des Abschnitts (6") teilweise angepasst und von dem Abschnitt (6") getrennt ist.

8. Dichtung nach Anspruch 7, **dadurch gekennzeichnet, dass** die ringförmige Anlage- und Stützstruktur (12) aus einem gebogenen Umfangsflansch besteht, wobei der Biegeradius des Flansches (12) in Abwesenheit von Druck größer als der Biegeradius des ringförmigen Verbindungsabschnitts (6") der Dichtungslippe (6) nach Montieren der Dichtung (1) um das abzudichtende Element (7) ist, wobei der Biegeradius des Flansches (12) in Abwesenheit von Spannung auf die Dichtungslippe (6) bevorzugt größer als der Biegeradius des vorgebogenen ringförmigen Abschnitts (8) der Scheibe (5) ist.

9. Dichtung nach dem Anspruch 7 oder 8, **dadurch gekennzeichnet, dass** die ringförmige Anlage- und Stützstruktur (12) in Form des Umfangsflansches sich bis zu einem geringen Abstand von dem abzudichtenden Element (7) erstreckt, wobei der freie Rand (12') des Flansches (12) in einem Abstand zu dem Element (7) angeordnet ist, der kleiner als die Dicke (EL) der Dichtungslippe (6), bevorzugt kleiner als mindestens die Hälfte der Dicke (EL) ist.

10. Dichtung nach einem der Ansprüche 7 bis 9, **dadurch gekennzeichnet, dass** die Anlage- und Stützstruktur (12) Teil eines zweiten Rings (13) ist, der mindestens einen durch einen die Struktur ausbildenden gekrümmten ringförmigen Flanschabschnitt (12) auf der Innenseite verlängerten radialen Flansch (13') aufweist.

11. Dichtung nach Anspruch 10, **dadurch gekennzeichnet, dass** zumindest der auf dem radialen Flansch (4) des Stützrings (2) angeordnete Abschnitt (5') der Scheibe (5) sandwichartig zwischen dem Stützring (2) und dem radialen Flansch (13') des zweiten Rings (13) angeordnet ist, wobei gegebenenfalls eine mechanische Klemmung des Abschnitts (5') der Scheibe realisiert ist.

12. Dichtung nach einem der Ansprüche 7 bis 9, **dadurch gekennzeichnet, dass** die Anlage- und Stützstruktur (12) integraler Bestandteil des Stützrings (2) ist und einen gekrümmten Flanschabschnitt aufweist, der innerlich den radialen Flansch (4) verlängert.

13. Dichtung nach einem der Ansprüche 1 bis 9 und 12, **dadurch gekennzeichnet, dass** die Scheibe (5) alle Flächen des Stützrings (2) bedeckt, die einerseits in Richtung der unter Druck stehenden Mitte (MLS) und andererseits in Richtung der Wand (14') des Montierungsgehäuses (14) der Dichtung (1) ausgerichtet sind, gegen welche der axiale Flansch (3) des Stützrings (2) dichtend zur Anlage kommt.

14. Dichtung nach einem der Ansprüche 1 bis 9, 12 und 13 oder einem der Ansprüche 10 und 11, **dadurch gekennzeichnet, dass** der Stützring (2) und gegebenenfalls der zweite Ring (13) aus einem Blech mit hoher Elastizitätsgrenze gebildet ist/sind.

## Claims

1. Seal, particularly for a pressurized liquid, comprising, on the one hand, a support ring or frame (2) with an external axial flange (3) and an internal radial flange (4) and, on the other hand, a washer (5) made from a PTFE-based gasket material which is mounted or arranged on the said ring (2), at least partially covering the external face (3') of the axial flange (3) and extending beyond the internal end (4') of the radial flange (4) so as to form a flexible sealing lip (6) intended to press circumferentially against or on an element (7) that is to be sealed, particularly a rotary cylindrical element such as a shaft or the like, the said sealing lip (6) then having an annular portion (6') predominantly bearing against the element that is to be sealed and a bowed annular connecting portion (6"),
which seal (1) is **characterized in that** the sealing lip (6) has a thickness (EL) less than 0.8 mm, and forms, when free of stress, a frustoconical annulus or sleeve with a vertex angle (AS) comprised between 40° and 80°.

2. Seal according to Claim 1, **characterized in that** the sealing lip (6), preferably in the form of a frustoconical sleeve with a wall that is substantially planar when free of stress, is connected to the part (5') of the washer (5) bearing on and/or secured to the radial flange (4) by a prebowed or inflected annular region (8) of the washer (5), situated advantageously immediately after the internal end (4') of the said radial flange (4), oriented towards the environment that is to be sealed (MLS) and forming part of the annular connecting portion (6").

3. Seal according to Claim 1 or 2, **characterized in that** the thickness of the sealing lip (6) is comprised between 0.4 and 0.7 mm, preferably between 0.45 and 0.65 mm, and **in that** the vertex angle (AS) is comprised between 45° and 75°, preferably between 50° and 70°, the prebowed region (8) advantageously being configured by local deformation of the wall of the washer (5) before or after mounting on the bearing ring (2).

4. Seal according to any one of Claims 1 to 3, **characterized in that** the dimensions and relative arrangements of the support ring (2), of the washer (5) made of PTFE-based material and of the element (7) that is to be sealed define a region (9) of contact and intimate bearing of the portion (6') of the sealing lip (6) against the said element (7) with an axial bearing surface (P) comprised between 1.5 and 5.0 mm, preferably comprised between 2.5 and 3.5 mm, from the free edge (6"') of the said lip (6).

5. Seal according to any one of Claims 1 to 4, **characterized in that** the sealing lip (6) comprises, at the contact face of the portion (6') of this lip (6) that is intended to come to bear against the element (7) that is to be sealed, an upsetting structure (10) that is helicoidal or in the form a screw thread, advantageously in the form of a groove with opposite flanks having different inclinations or gradients, preferably with a cross section or profile of asymmetric triangular shape.

6. Seal according to any one of Claims 1 to 5, **characterized in that** the sealing washer (5) protrudes beyond the free edge (3") of the axial flange (3) and forms a projecting part (11), that is inclined or curved inwards and covers at least the exterior edge face of the said free edge (11).

7. Seal according to any one of Claims 1 to 6, **characterized in that** it comprises an annular bearing and support structure (12) for the sealing lip (6), situated on the opposite side to the environment that is to be sealed (MLS) and extending in the region of the bowed annular portion (6") of the said lip (6), partially espousing the shape of this portion (6") while being separated therefrom.

8. Seal according to Claim 7, **characterized in that** the annular bearing and support structure (12) consists of a bowed circumferential flange, the bend radius for the bowing of the said flange (12) being greater than the bend radius for the bowing, in the absence of pressure, of the annular connecting portion (6") of the sealing lip (6) after the seal (1) has been fitted around the element (7) that is to be sealed, preferably greater than the bend radius of the bowing of the prebowed annular region (8) of the washer (5) when the sealing lip (6) is unstressed.

9. Seal according to any one of Claims 7 and 8, **characterized in that** the annular bearing and support structure (12) in the form of a circumferential flange extends as far as a short distance away from the element (7) that is to be sealed, the free edge (12') of the flange (12) being situated at a distance away from the said element (7) that is less than the thickness (EL) of the sealing lip (6), preferably less than at least half the said thickness (EL).

10. Seal according to any one of Claims 7 to 9, **characterized in that** the bearing and support structure (12) forms part of a second ring (13) comprising at least one radial flange (13') extended on the internal side by a curved annular flange portion (12) forming the said structure.

11. Seal according to Claim 10, **characterized in that** at least part (5') of the washer (5) arranged on the radial flange (4) of the support ring (2) is sandwiched between the latter and the radial flange (13') of the second ring (13), possibly with the said washer part (5') becoming mechanically trapped.

12. Seal according to any one of Claims 7 to 9, **characterized in that** the bearing and support structure (12) forms an integral part of the support ring (2) and consists of a curved flange portion internally extending the radial flange (4).

13. Seal according to any one of Claims 1 to 9 and 12, **characterized in that** the washer (5) covers all the faces of the support ring (2) that face, on the one hand, towards the pressurized environment (MLS) and, on the other hand, towards the wall (14') of the mounting housing (14) for the seal (1) against which wall the axial flange (3) of the support ring (2) bears in a sealed manner.

14. Seal according to any one of Claims 1 to 9, 12 and 13 or either one of Claims 10 and 11, **characterized in that** the support ring (2) and, where appropriate, the second ring (13) is (are) made of a sheet metal of the HLE type.
